(19) **Europäisches Patentamt**

**European Patent Office**

**Office européen des brevets**

(11) **EP 0 883 288 A1**

(12) **EUROPEAN PATENT APPLICATION**

(43) Date of publication:
09.12.1998 Bulletin 1998/50

(51) Int. Cl.⁶: **H04N 1/409**

(21) Application number: **98100845.1**

(22) Date of filing: **19.01.1998**

(84) Designated Contracting States:
**AT BE CH DE DK ES FI FR GB GR IE IT LI LU MC NL PT SE**
Designated Extension States:
**AL LT LV MK RO SI**

(30) Priority: **04.06.1997 US 869049**

(71) Applicant:
**Hewlett-Packard Company**
**Palo Alto, California 94304 (US)**

(72) Inventor: **Tepmongkol, Warangkana**
**Cupertino, California 95014 (US)**

(74) Representative:
**Schoppe, Fritz, Dipl.-Ing.**
**Schoppe & Zimmermann**
**Patentanwälte**
**Postfach 71 08 67**
**81458 München (DE)**

(54) **System and method for selective application of sharpening to improve text component of halftone images**

(57) A pixel data processing system (22, 40) evaluates a pixel data stream and detects rapid changes in the image, such as black/white transitions that occur along text edges. The pixel data processing system detects a gray level change by computing an absolute gray level change from a gray level value of one pixel datum and a gray level value of a neighboring pixel datum. The absolute gray level change is then compared to a predefined value, with the result indicating whether the image is changing rapidly. The pixel data processing system includes a sharpening filter (32, 44) to sharpen the pixel data when the image is changing rapidly (i.e., when the gray level change exceeds the predefined value). The sharpening filter (32, 44) is not used when the image is changing slowly (i.e., when the gray level change does not exceed the predefined value). The selective application of the sharpening filter improves the edge characteristics of text, without degrading graphical components of the image. The pixel data may then be further processed using a halftone or continuous-tone process.

*Fig. 8*

## Description

### FIELD OF THE INVENTION

This invention relates to systems and methods for processing pixel data. More particularly, this invention relates the systems and methods implemented in printers, scanners, photocopiers, and the like for processing pixel data representative of images containing text and/or graphical components.

### BACKGROUND OF THE INVENTION

In conventional black and white printing, intermediate shades of gray can be simulated using only black ink on a white colored medium. Various well known techniques are used to create the gray appearance.

Each picture element (i.e., "pixel") or dot in an image is printed according to its corresponding pixel data which provides information pertaining to how that pixel is to appear. The pixel data includes a parameter known as the "grayscale" or "gray level," which represents the relative gray color of the pixel. This parameter can be expressed in terms of a color scale from a minimal value (representing one extreme, either black or white) and a maximum value (representing the other extreme, either white or black). The gray level intermediate of the minimum and maximum value indicates how gray the pixel is to appear. For example, some conventional printers offer 256 different shades of gray. Assume that a gray level of 0 represents white and a gray level of 255 represents black. In this case, a gray level of 51 appears less gray (i.e., closer to white), whereas a gray level of 198 appears more gray (i.e., closer to black).

Halftone processing is a technique used to convert the gray level image data into a bi-level image data suitable for black and white printing. That is, the gray level associated with each pixel is converted to black and white image data which commands the printer how to apply a black dot on a white medium to achieve the desired gray level. Halftone processing is usually done at a lower resolution than that of the original gray level image to create a sufficient number of gray levels.

There are many conventional halftone processing techniques, such as error diffusion, random dithering, and ordered dithering.

The halftone process is effective when applied to graphical images, such as pictures. However, a problem arises in halftone processing when attempting to handle edges of an image where the gray levels rapidly change. The most typical case of rapid gray level change occurs in textual images at the edge of a letter. The pixels that compose the letter are typically very dark (i.e., having a gray level at one extreme) and the spaces between letters are typically very light (i.e., having a gray level at another extreme). Applying the halftone process to this text can result in a jagged or fuzzy appearance.

One way to cure the jagged or fuzzy appearance of text is to implement a conventional threshold technique instead of a halftone process. A "threshold" process compares the gray level of a pixel to a threshold value (such as the mid-point of the gray color scale). A gray level that exceeds the threshold value is applied, for example, as black whereas a gray level that meets or falls below the threshold value remains white. The threshold process eliminates the jagged or fuzzy appearance and provides clear, crisp edges in text. Unfortunately, the threshold process significantly degrades the quality of graphical images because it eliminates the intermediate gray color.

This poses the problem of how to process images having mixed formats of text and graphics. One prior art solution is to scan an entire page of pixel data and discriminate between textual and graphical components using some computationally intensive method. Then, during printing, each component is treated separately so that the halftone process is applied to the graphical components and the threshold technique is applied to the text components.

The drawback of this scan-and-discriminate solution is it requires extensive computations. Expensive complicated hardware or software is needed, and the computations consume a significant portion of the processing resources. The solution further requires a large amount of memory to hold entire pages of data, as well as the discrimination information needed to discern between the text and graphical components. In addition, this solution cannot be implemented for real-time use in analyzing pixel data on the fly. Another drawback is that it can introduce side effects resulting from wrongly characterizing a graphical component as a textual component and vice versa. The side effects are manifested as an altered graphical component.

Another prior art solution is to use the error diffusion technique to handle both graphical and textual components. However, this solution has similar drawbacks concerning significant consumption of computational resources, additional hardware/software expenses to implement, large memory sizes, and being non-conducive to real-time implementation. The error diffusion solution has a further drawback in that it tends to blur or defocus the textual components of a mixed formatted image.

Accordingly, there is a need to provide a low cost solution for pixel data processing, which eliminates the jagged or fuzzy edges in text components, without degrading the appearance of graphical components.

### SUMMARY OF THE INVENTION

According to one aspect of this invention, a system and method for processing an image includes evaluating pixel data to detect image changes and selectively sharpening the pixel data in the event that the image changes exceed a predefined amount. The pixel data may then be further processed using a halftone process or continuous tone process. Selectively sharpening the pixel data improves textual components without degrading the graphical components of an image.

According to another aspect of this invention, a pixel data processing system has an image transition detector to evaluate a pixel data stream and detect rapidly changes in the image, such as those that occur along text edges. In the described implementation, the image transition detector detects a gray level change by computing an absolute gray level change from a gray level value of one pixel datum and a gray level value of a neighboring pixel datum. The absolute gray level change is then compared to a predefined value, with the result indicating whether the image is changing rapidly. For example, when the gray level change exceeds the value, the image is deemed to be changing rapidly; whereas, when the gray level change does not exceed the value, the image is deemed not to be changing rapidly.

The pixel data processing system further includes a sharpening filter to sharpen the pixel data when the image is changing rapidly (i.e., when the gray level change exceeds the predefined value). The sharpening filter is not used when the image is changing slowly (i.e., when the gray level change does not exceed the predefined value). The selective application of the sharpening filter improves the edge characteristics of text by removing or reducing jaggedness or fuzziness, without degrading graphical components of the image.

According to another aspect of this invention, the sharpening filter is an n x 1 filter (where n is the number of pixels). This filter can be inexpensively implemented in hardware or software to examine the pixel data stream in real-time. Moreover the filter can be easily integrated with existing image processes, such as halftone or continuous-tone processes.

According to still another aspect of this invention, the sharpening filter utilizes a set of coefficients which can be varied to adjust the filter characteristics. The sharpening filter can be further configured to adaptively vary the coefficients based on the pixel data.

## BRIEF DESCRIPTION OF THE DRAWINGS

Fig. 1 is a side view of a printer.

Fig. 2 is a block diagram of a data processing unit employed in the printer. The data processing unit is constructed according to a first implementation.

Fig. 3 is a block diagram of a data processing unit constructed according to a second implementation.

Fig. 4 is a diagrammatic illustration of an n x 1 sharpening filter.

Fig. 5 is a diagrammatic illustration showing real-time application of the Fig. 4 sharpening filter to a pixel data stream.

Fig. 6 is a diagrammatic illustration of an n x n sharpening filter.

Fig. 7 is a diagrammatic illustration of an n x m sharpening filter.

Fig. 8 is a flow diagram showing steps in a method for processing pixel data.

## DETAILED DESCRIPTION OF THE PREFERRED EMBODIMENT

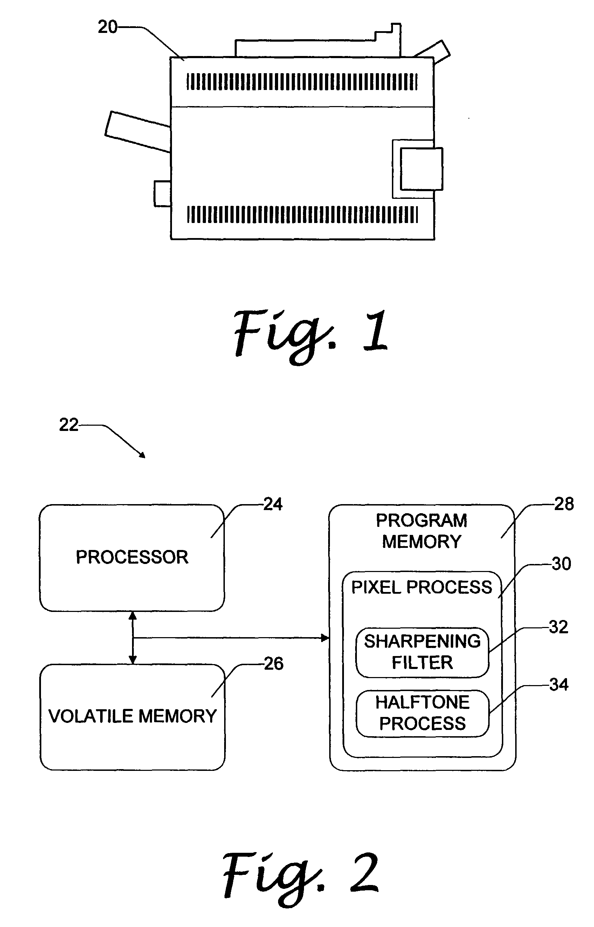

Fig. 1 shows a printer 20, which is illustrated as a laser printer, although it can be implemented as other types of printers, such as inkjet printers. This invention is described in the context of printers, but may further be incorporated into other products that utilize printing devices, such as scanners and photocopiers.

This invention concerns a pixel data processing system employed in printing devices for processing images. The images may be in the form of a single format having only textual or graphical components, or a mixed format having both textual and graphical components. The pixel data processing system evaluates pixel data for those images to determine when the image is changing rapidly or slowly, as indicated by the gray level differences from pixel to pixel. The data processing system selectively sharpens the pixel data when the image is changing rapidly to produce clear, crisp boundary transitions, while foregoing sharpening when the image is changing slowly to avoid degrading the image.

The pixel data processing system is particularly useful for processing images having a mixed format of text and graphics. The system tends to sharpen the text components of an image, since the text represents a rapid gray level change along its edges during transition between black and white. On the other hand, the system tends to forego sharpening of the graphic components of the image, since the graphics typically experience slow gray level changes from pixel to pixel.

The pixel data processing system and method can be implemented in hardware, firmware, and/or software. It can further be incorporated into existing image processing systems as a preprocess that is performed prior to other image processing. For instance, the selective application of sharpening can be performed prior to a halftone process or a continuous-tone process.

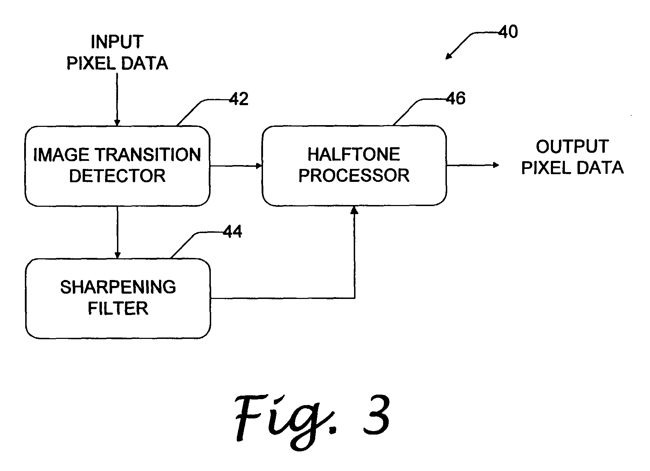

Fig. 2 shows a software implementation of a pixel data processing system which is implemented as a processing unit 22 in the printer 20. The pixel data processing unit 22 has a processor 24, a volatile memory 26 (i.e., RAM), and a non-volatile program memory 28 (e.g., ROM, Flash).

A pixel processing application 30 is stored program memory 28 and loaded into volatile memory 26 for execution on processor 24 during the printing cycle. The pixel processing application 30 processes pixel data used to create printed images. It includes a sharpening filter 32 and a halftone process 34. Although a halftone process is shown for discussion purposes, other image processing techniques may be used, such as continuous-tone processing.

Pixel data is passed through the processor 24 in route to the printing apparatus. The pixel processing application 30 monitors gray level differences among neighboring pixels to selectively sharpen the pixel data using the sharpening filter 32 in the event that the gray level differences exceed a predefined gray level value. Thereafter, if desired, the pixel processing application 30 applies the halftone process 34 to the pixel data.

Fig. 3 shows an alternative hardware/firmware implementation of a data pixel processing system 40. It includes an image transition detector 42 to evaluate an incoming pixel data stream and detect gray level changes in the image. The image transition detector 42 determines whether an absolute gray level change between neighboring pixels exceeds a predefined value, thereby indicating whether the gray levels of pixels along certain border transitions are changing rapidly.

The data pixel processing system 40 has a sharpening filter 44 and a halftone processor 46 coupled to the image transition detector 42. The image transition detector 42 routes certain portions of the pixel data stream to the sharpening filter 44 when the image is determined to be changing rapidly. The sharpening filter 44 filters the pixel data to remove jaggedness or fuzziness along the boundary edges in the image. The pixel data is then passed to the halftone processor 46 for further processing.

If the image transition detector 42 determines that the image is not rapidly changing, the image transition detector forwards the pixel data directly to the halftone processor 46, bypassing the sharpening filter 44.

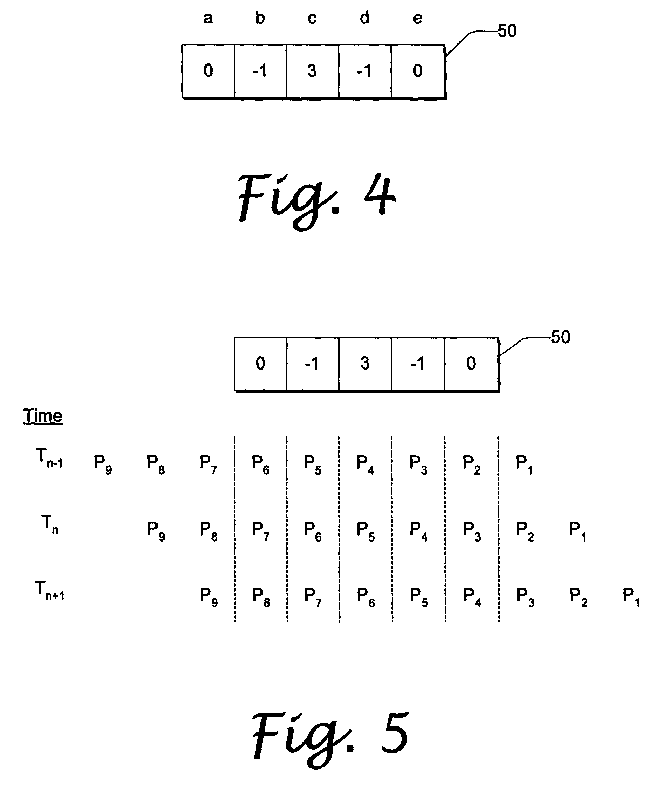

Fig. 4 shows a sharpening filter 50, which can be implemented in hardware as the filter 44 (Fig. 3), or in software as the filter 32 (Fig. 2). The sharpening filter 50 is an n x 1 filter, where "n" represents the number of pixels. In the example illustration, the sharpening filter 50 is a 5 x 1 filter which operates on pixel data for five consecutive pixels. However, other n x 1 filters may be used, such as a 3 x 1 filter or a 7 x 1 filter.

The sharpening filter 50 modifies the pixel datum associated with the central pixel at place "c" in the filter, hereinafter referred to as the "target pixel." With the 5 x 1 filter, the sharpening filter 50 utilizes pixel data from the two most neighboring pixels on either side of the target pixel (i.e., pixels at filter places a, b, d, and e). The sharpening filter contains a coefficient for each filter place to weight the gray level values in the corresponding pixel data. The weighting coefficients modify the existing gray level values in a manner that visually sharpens the eventual image at those pixels. In this filter, the coefficients 0, -1, 3, -1, and 0 are provided for pixel places a, b, c, d, and e, respectively.

Fig. 5 shows the sharpening filter 50 being applied to a pixel data stream consisting of pixel data $P_1$, $P_2$, ... , $P_9$. The pixel data is representative of gray level values which are modified by the filter. At time $T_{n-1}$, the sharpening filter is applied to target pixel datum $P_4$, and hence pixel data $P_2$-$P_6$ are passed through the filter 50.

A filter value FV is computed as follows:

$$FV = 0 \times P_6 + (-1) \times P_6 + 3 \times P_4 + (-1) \times P_3 + 0 \times P_2$$

The sharpening filter replaces the original gray level value for the pixel datum $P_4$ with the filter value FV.

Subsequently, at time $T_n$, the sharpening filter 50 is applied to target pixel datum $P_5$. Pixel data $P_3$-$P_7$ are passed through the filter, resulting in a filter value FV of:

$$FV = 0 \times P_7 + (-1) \times P_6 + 3 \times P_6 + (-1) \times P_4 + 0 \times P_3$$

The sharpening filter replaces the original gray level value for the pixel datum $P_5$ with the computed filter value FV. The process is repeated for each pixel designated to be sharpened.

The sharpening filter can be implemented with very little expense. The memory requirements are very small. For an n x 1 filter, a small memory having sufficient storage to hold data for "n" pixels is used. As a result, the pixel data can be selectively passed through the sharpening filter on the fly for real-time processing.

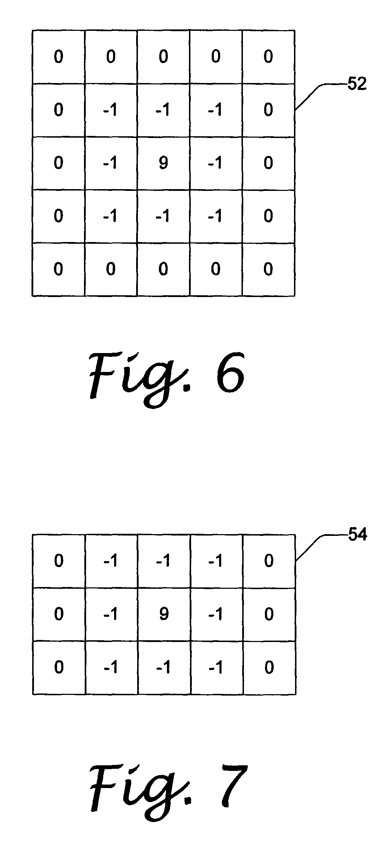

Fig. 6 shows an n x n matrix sharpening filter 52 which can be alternately used in the pixel data processing system. While the n x n filter might improve image quality, it has a drawback of increased storage requirements. With an n x n filter, n lines of the image are stored so that pixel data for pixels above and below the target pixel are available for use in the filter.

Fig. 7 shows an n x m sharpening filter 54, where n > 1 and m > 1, which can also be used in the pixel data processing system. In Fig. 7, the n x m filter 54 is a 5 x 3 filter, although other sizes are possible, such as a 7 x 5 filter.

According to an aspect of this invention, the sharpening filter can be configured to permit variation of its filter coefficients to adjust the qualities of image sharpening. In this manner, a manufacturer can set the filter coefficients during manufacturing. Another approach is to implement the sharpening filter 44 as an adjustable filter which varies the coefficients according to the pixel data. For instance, different sets of coefficients might be used depending upon the magnitude of change in gray levels between neighboring pixels.

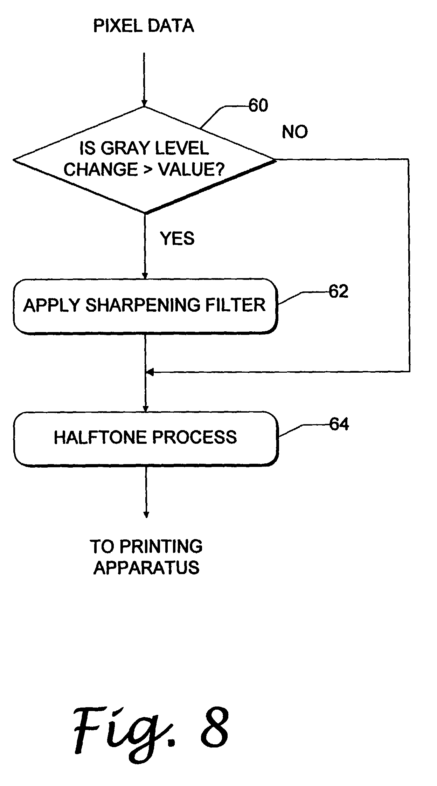

Fig. 8 shows a method for processing pixel data in an image. The method can be implemented in software by the pixel processing application 30 (Fig. 2) or in hardware by the pixel processing system 40 (Fig. 3). At step 60, the pixel data is evaluated pixel-by-pixel to detect whether a gray level change in the image exceeds a predefined value.

In one implementation, the image transition detector 42 or pixel processing application 30 computes an absolute gray level change using gray level values of neighboring pixels. For discussion purposes, suppose that there are 256 different gray levels. Each pixel datum includes a gray level value ranging from 0 to 255. An absolute gray level change "A" is derived by calculating the absolute value of the difference between the gray level values of neighboring pixels, which may be adjacent pixels or pixels that are separated slightly by one or two pixels. In this example, the target pixel "c" and pixels spaced one pixel away, i.e., pixels "a" and "e," are used. Accordingly, the absolute gray level change "A" is computed as:

A = greater of |c - a| and |c - e|

The absolute gray level value is then compared to the predefined value which is set by the manufacturer. For a gray level range of 0 to 255, one suitable value is 100. Thus, for each pixel datum "c," the image transition detector 42 or pixel processing application 30 computes the absolute gray level change "A" using gray level values from pixel datum "a" and "e" and analyzes whether A exceeds the value 100. In this example, step 60 can be reformulated as:

Does |c - a| or |c - e| > 100?

As can be appreciated from this example, larger values for the absolute gray level change "A" indicate that the image is rapidly changing from black to white, or from white to black. When the absolute difference between two closely neighboring pixels exceeds 100, the image is changing rapid. On the other hand, when the absolute difference between two closely neighboring pixels does not exceed 100, the image change is not rapid.

If the gray level change exceeds the value (i.e., the yes branch from step 60 in Fig. 8), the sharpening filter is applied to the appropriate pixels (step 62). Conversely, if the gray level change fails to exceed the value (i.e., the no branch from step 60, the sharpening step 62 is bypassed.

At step 64, any further image processing, such as a halftone process, is performed on the pixel data. The pixel data is then passed on to the printing apparatus.

The invention has been described in language more or less specific as to structural and methodical features. It is to be understood, however, that the invention is not limited to the specific features described, since the means herein disclosed comprise preferred forms of putting the invention into effect. The invention is, therefore, claimed in any of its forms or modifications within the proper scope of the appended claims appropriately interpreted in accordance with the doctrine of equivalents.

**Claims**

1. A pixel data processing system comprising:

an image transition detector (42) to evaluate pixel data and detect a gray level change in an image represented by the pixel data, the image transition detector determining whether the gray level change exceeds a predefined value; and
a sharpening filter (44) coupled to sharpen the pixel data when the gray level change exceeds the predefined value.

2. A pixel data processing system as recited in claim 1, wherein the image transition detector (42) computes an absolute gray level change from a gray level value of one pixel datum and a gray level value of a neighboring pixel datum and compares the absolute gray level change with the predefined value.

3. A pixel data processing system as recited in claim 1, wherein the sharpening filter (44) comprises a filter selected from a group of filters comprising: an n x 1 filter (50), where n is a number of pixels greater than one; an n x n filter (52); and an n x m filter (54), where m is also a number of pixels greater than one.

4. A pixel data processing system as recited in claim 1, wherein the sharpening filter (44) utilizes a set of coefficients, the sharpening filter being configured to vary the coefficients.

5. A pixel data processing system as recited in claim 1, wherein the sharpening filter (44) utilizes a set of coefficients, the sharpening filter being configured to adaptively vary the coefficients based on the pixel data.

6. A pixel data processing system as recited in claim 1, further comprising a halftone processor (46) coupled to halftone process the pixel data.

7. A printer incorporating a pixel data processing system as recited in claim 1.

8. In a printing device having a pixel data processing unit (22) for processing pixel data that is representative of an image, a pixel processing application (30) executing on the processing unit (22) to monitor gray level differences among neighboring pixels and to selectively sharpen the pixel data in the event that the gray level differences exceed a predefined gray level value.

9. A printer incorporating a pixel processing application as recited in claim 8.

10. A method for processing an image, comprising the following steps:

evaluating pixel data to detect a gray level change in the image;
determining whether the gray level change exceeds a predefined value; and
sharpening the pixel data when the gray level change exceeds the predefined value and not sharpening the pixel data when the gray level change does not exceed the predefined value.

# Fig. 1

# Fig. 2

INPUT
PIXEL DATA

```
          ┌── 42                        ┌── 46
          │                             │           40
┌─────────────────┐          ┌─────────────────┐
│ IMAGE TRANSITION│  ──────▶ │    HALFTONE      │ ──────▶   OUTPUT
│    DETECTOR      │          │   PROCESSOR      │          PIXEL DATA
└─────────────────┘          └─────────────────┘
          │                             ▲
          ▼    ┌── 44                   │
┌─────────────────┐                     │
│   SHARPENING     │ ────────────────────
│    FILTER        │
└─────────────────┘
```

# Fig. 3

| a | b | c | d | e | |
|---|---|---|---|---|---|
| 0 | -1 | 3 | -1 | 0 | — 50 |

# Fig. 4

| | | | | | | | | | |
|---|---|---|---|---|---|---|---|---|---|
| 0 | -1 | 3 | -1 | 0 | — 50 | | | | |

Time

| | | | | | | | | | | |
|---|---|---|---|---|---|---|---|---|---|---|
| $T_{n-1}$ | $P_9$ | $P_8$ | $P_7$ | $P_6$ | $P_5$ | $P_4$ | $P_3$ | $P_2$ | $P_1$ | |
| $T_n$ | | $P_9$ | $P_8$ | $P_7$ | $P_6$ | $P_5$ | $P_4$ | $P_3$ | $P_2$ | $P_1$ |
| $T_{n+1}$ | | | $P_9$ | $P_8$ | $P_7$ | $P_6$ | $P_5$ | $P_4$ | $P_3$ | $P_2$ | $P_1$ |

# Fig. 5

| 0 | 0 | 0 | 0 | 0 |
|---|---|---|---|---|
| 0 | -1 | -1 | -1 | 0 |
| 0 | -1 | 9 | -1 | 0 |
| 0 | -1 | -1 | -1 | 0 |
| 0 | 0 | 0 | 0 | 0 |

—52

# Fig. 6

| 0 | -1 | -1 | -1 | 0 |
|---|---|---|---|---|
| 0 | -1 | 9 | -1 | 0 |
| 0 | -1 | -1 | -1 | 0 |

—54

# Fig. 7

PIXEL DATA

IS GRAY LEVEL
CHANGE > VALUE? —60

NO

YES

APPLY SHARPENING FILTER —62

HALFTONE PROCESS —64

TO PRINTING
APPARATUS

# Fig. 8

## EUROPEAN SEARCH REPORT

| | | European Patent Office | EUROPEAN SEARCH REPORT | | Application Number |
| :--- | :--- | :--- | :--- | :--- | :--- |
| | | | | | EP 98 10 0845 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
| :--- | :--- | :--- | :--- |
| X | US 5 311 328 A (KAZUYUKI MURATA) 10 May 1994<br>* column 1, line 53 - column 3, line 8 *<br>* column 14, line 1 - line 45 *<br>--- | 1-10 | H04N1/409 |
| A | EP 0 632 642 A (SHARP K. K.) 4 January 1995<br>* page 2, line 41 - line 47 *<br>* page 4, line 44 - line 51 *<br>--- | 2 | |
| A | US 4 084 196 A (J. G. TISUE) 11 April 1978<br>* column 5, line 1 - line 34 *<br>--- | 3 | |
| A | US 4 080 634 A (W. F. SCHREIBER) 21 March 1978<br>----- | | |
| | | | TECHNICAL FIELDS SEARCHED (Int.Cl.6) |
| | | | H04N |

The present search report has been drawn up for all claims

| Place of search | Date of completion of the search | Examiner |
| :--- | :--- | :--- |
| THE HAGUE | 28 August 1998 | De Roeck, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)